# EUROPÄISCHE PATENTSCHRIFT

(11) **EP 0 935 536 B1**
(45) Veröffentlichungstag und Bekanntmachung des Hinweises auf die Patenterteilung: **12.12.2001**
(21) Anmeldenummer: 97943719.1
(22) Anmeldetag: 23.10.1997
(51) Int. Cl.: B60B 9/08, B60B 9/00, B60B 9/02, B60B 19/00, B60B 9/04

(54) **RADKONSTRUKTION, INSBESONDERE FÜR AUTOMOBILE**
WHEEL CONSTRUCTION, IN PARTICULAR FOR AUTOMOBILES
STRUCTURE DE ROUE, NOTAMMENT D'AUTOMOBILES

(30) Priorität: 05.11.1996 CH 272696; 23.01.1997 CH 13897; 25.04.1997 CH 97597
(43) Veröffentlichungstag der Anmeldung: 18.08.1999
(73) Patentinhaber: Kuhl Wheels, Llc, Los Gatos, CA 95030 (US)
(72) Erfinder: BRAUNSCHWEILER, Hans, Georg, CH-8803 Rüschlikon (CH)
(74) Vertreter: Hug Interlizenz AG
(86) Internationale Anmeldenummer: CH9700398
(87) Internationale Veröffentlichungsnummer: WO9819874

(56) Entgegenhaltungen:
- DE-C- 202 614
- DE-C- 803 743
- FR-A- 366 221
- FR-A- 507 112
- FR-A- 525 584
- FR-A- 871 788
- FR-A- 2 676 397
- GB-A- 198 440
- US-A- 1 365 181
- US-A- 1 701 325
- US-A- 2 206 230
- US-A- 3 465 804

## Beschreibung

### TECHNISCHES GEBIET

Die vorliegende Erfindung betrifft eine Radkonstruktion, insbesondere für Automobile, mit Felge und Speichensystem, wobei das Speichensystem mindestens ein Profilelement zur Übertragung der Kräfte zwischen Nabe und Felge aufweist.

Der Begriff Speichensystem soll hier im weitesten Sinne verstanden werden und alle konstruktiven Mittel umfassen, welche zwischen Nabe und Felge angeordnet sind und zur Übertragung der Kräfte zwischen diesen dienen. Die Nabe ist im Zentrum der Radkonstruktion angeordnet und ist das Verbindungsglied zur Achskonstruktion. Sie kann mit dem Speichensystem im wesentlichen fest und mit der Achskonstruktion zwecks "Radwechsel" lösbar, oder umgekehrt, mit dem Speichensystem lösbar und mit der Achskonstruktion im wesentlichen fest verbunden sein. Es können auch Teile der Nabe am Speichensystem angeordnet und mit weiteren Nabenteilen an der Achskonstruktion lösbar verbunden sein. Unter der Felge soll, sofern dieser Begriff nachfolgend nich in Anführungszeichen gesetzt ist und dann zumindest das Speichensystem mit umfasst, lediglich der Aussenring des Rades verstanden werden, welcher den Reifen bzw. Pneu trägt.

Die auf Radkonstruktionen und ihre einzelnen Komponenten einwirkenden Kräfte ergeben sich in radialer Richtung zwischen Nabe und Felge durch das Fahrzeuggewicht sowie durch dynamische Belastungen beim Überfahren von Unebenheiten oder Schlaglöchern. Beim Beschleunigen und Bremsen treten tangentiale Kräfte zwischen Nabe und Felge auf. Beim Kurvenfahren kommen Kräfte bzw. Drehmomente hinzu, welche z.B. Nabe und Felge umlaufend aus ihrer parallelen Lage zueinander herauszubiegen trachten. Zur Übertragung dieser Kräfte, insbesondere der radialen, bieten sich Elemente wie Speichen, Staketen oder Scheiben (voll oder durchbrochen) an. Weitere Vorgaben wie Gewicht, Preis, Lüftung aber auch die Optik haben Konstrukteure und Designer zu den unzähligsten Kombinationen dieser Elemente animiert.

### STAND DER TECHNIK

Im Automobilbereich am meisten verbreitet ist die sogenannte "Stahlfelge", da sie technisch funktionell und auch recht kostengünstig herstellbar ist. Sie bietet optisch jedoch kein besonders ansprechendes Erscheinungsbild. Das Speichensystem, welches bei "Stahlfelgen" aus einem mit Öffnungen bzw. Durchbrechungen versehenen gezogenen Stahlblech besteht und auch als Radschüssel oder Radscheibe bezeichnet wird, wird deshalb in der Regel mit einer Radkappe abgedeckt. Eine Nabe als funktionell eigenständiges Teil weisen "Stahlfelgen" nicht auf. Als Nabe wird hier meist derjenige Teil der Achskonstruktion bezeichnet, an welchem die Stahlfelge angeschraubt wird.

In zunehmendem Masse werden die "Stahlfelgen" von sogenannten "Leichtmetallfelgen" verdrängt, da diese materialbedingt geringeres Gewicht haben, vor allem aber wohl deswegen, weil das Speichensystem optisch ansprechender gestaltbar bzw. gestaltet ist. Bei den "Leichtmetallfelgen" ist das Speichensystem, häufig einstückig mit der Felge, als Formgussteil ausgebildet. Als Designobjekt und durch das zu ihrer Herstellung erforderliche Gusswerkzeug sind "Leichtmetallfelgen" teuerer als "Stahlfelgen". Für jeden "Felgentyp" sowie jede "Felgengrösse" braucht es ein anderes Werkzeug. Jede Form- bzw. Designänderung bedingt ebenfalls jeweils ein neues Werkzeug. Die Markteinführungskosten eines neuen Felgentyps sind daher hoch.

Aus der FR 366.221 und der gattugsgemässen FR 2 676 397 A1 sind Radkonstruktionen mit einem Speichensystem bekannt, welches als tragende Elemente elastisch deformierbare, d.h. federnde Ringe aufweist. Durch die Verformbarkeit der Ringe soll den Rädern eine innere Elastizität bzw. Nachgiebigkeit verliehen werden. Eine Radkonstruktion mit einem prinzipiell ähnlichen Speichensystem ist auch aus der US 3,465,304 bekannt.

### DARSTELLUNG DER ERFINDUNG

Durch die Erfindung, wie sie in den Patentansprüchen gekennzeichnet ist, wird eine Radkonstruktion mit einem Speichensystem geschaffen, welches bei ausreichender Stabilität mit geringem Gewicht und Materialaufwand einfach und kostengünstig herzustellen ist und sich zudem leicht und vielfältig variieren und dadurch aktuellen Modeströmungen anpassen lässt.

Das erfindungsgemässe Speichensystem umfasst gemäss Anspruch 1 mindestens ein Profilelement zur Übertragung der Kräfte zwischen Nabe und Felge, wobei die genannten Teile allerdings im Unterschied zu den vorbekannten zu einer in sich steifen Struktur zusammengefügt oder, insbesondere wenn die Nabe oder Teile der Nabe eher der Achskonstruktion zuzurechnen sind, zusammenfügbar sind.

Unter "steif" soll hierbei verstanden werden, dass sich die Radkonstruktion unter den auf sie einwirkenden Kräften und Drehmomenten praktisch nicht deformiert, jedenfalls nicht mehr oder nicht wesentlich mehr, als dies bei den bekannten "Stahl-" oder "Leichtmetallfelgen" derzeit der Fall ist. Im Gegensatz zu den üblichen Federwegen heutiger Automobile, welche im Bereich der Radaufhängung um die 10 cm betragen und im Bereich des Pneu immerhin auch noch um die 3 cm, liegen die zulässigen Deformationen damit allenfalls in der Grössenordnung von einigen Millimetern.

Das mindestens eine Profilelement weist weiter in axialer Richtung eine Breite auf, die wesentlich grösser ist als seine Wandstärke in Radial- und/oder Umfangsrichtung.

Heutige Radkonstruktionen werden mannigfaltigen, zumeist standardisierten Prüfungen unterworfen. Die wohl härteste dieser Prüfungen ist die sogenannte Umlaufbiegeprüfung. Bei dieser wird das Rad auf einem Tisch festgespannt und an seiner Nabe eine ca. 1 m lange Stange befestigt. Deren freies Ende wird dann unter Anwendung einer definierten Kraft eine vorgegebene Zeit lang im Kreis ausgelenkt. Ohne die vorerwähnte Steifigkeit, wäre dieser Test gar nicht zu bestehen.

Die Profilelemente können mit Vorteil einfach von langen Voll-, Halb- oder Hohlprofilstangen (sogenanntes Halbzeug) abgeschnitten werden, welche bereits die gewünschte Querschnittsform aufweisen. Durch moderne Trennmethoden, wie z.B. durch Laserschneiden, ist dies so ausführbar, dass jegliche Nachbearbeitung entfällt. Als Querschnittsformen kommen hierbei vor allem U- bzw. V-Formen, Scheiben, aber auch Ringe, Vielecke, Tropfen sowie Kombinationen davon in Frage. Die Profilelemente können andererseits auch aus Abschnitten von Flachprofilen oder aus flachen Stanzteilen durch Rollen und/oder Biegen hergestellt werden.

Ein weiterer Vorteil der Verwendung von Profilelementen liegt in deren Materialeigenschaften. Bedingt durch die Art ihrer Herstellung im Strangguss- oder Strangpressverfahren sind die Kristalle von Profilelementen gleichmässig in Profil-Längsrichtung ausgerichtet. Gegenüber Formgussteilen, wie z.B. den heutigen "Leichtmetallfelgen", für die eine weitgehend ungeordnete Kristallstruktur typisch ist, sind Profilelemente höher belastbar bzw. können bei gleicher Belastung ggf. schlanker ausgeführt werden.

Das oder die Profilelemente kann/können einfach mit der Nabe und der Felge sowie ggf. benachbarte Profilelemente untereinander verschraubt werden. Sie könnten jedoch genaussogut mit Nabe und/oder Felge und/oder untereinander vernietet oder formschlüssig oder stoffschlüssig, letzteres insbesondere durch Verschweissen, verbunden sein.

Die axialen Stirnflächen der Profilelemente können senkrecht und/oder unter einem schrägen Winkel gegenüber der Radachse ausgerichtet sein. Sie können auch gegenüber dieser gekrümmt verlaufen. Mit Vorteil kann vorgesehen sein, dass sich der genannte Winkel bei der Radmontage unter Ausbildung einer Vorspannung in der Radkonstruktion ändert. Eine Vorspannung in der Radkonstruktion kann andererseits bereits während der Herstellung auf prinzipiell gleiche Weise erzeugt und durch geeignete Massnahmen konserviert werden. Durch eine schräge oder gekrümmte Ausbildung lässt sich das Speichensystem auch an den Platzbedarf der Bremsbacken von Scheibenbremsen anpassen. Mehrere Profilelemente können axial gegeneinander versetzt in mehreren Ebenen angeordnet sein. Die Ausdehnung der Profilelemente in Axialrichtung ist vorzugweise um ein Mehrfaches grösser als ihre Wandstärke in Radial- und/oder Umfangsrichtung.

In einer weiteren bevorzugten Ausführungsform ist die Nabe als ein auswechselbares Teil ausgebildet. Hierdurch lässt sich eine Anpassung an unterschiedlich bemessene Mittenzentrierungen verschiedener Hersteller oder Fahrzeugtypen und/oder eine Verschiebung der sogenannten Einpresstiefe ohne Auswechslung des Rades als Ganzes erreichen, wodurch sich die Typenvielfalt an Rädern erheblich reduzieren lässt.

Die Profilelemente sind aus Stahl oder Leichtmetall (bzw. eine Leichtmetall-Legierung).

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: unter a) eine Ansicht und unter b) einen Schnitt I-I einer ersten, bevorzugten Ausführungsform einer Auto-Radkonstruktion nach der Erfindung mit mehreren u-förmigen Profilelementen;
- Fig. 2: unter a) - d) Querschnitte durch verschiedene Radkonstruktionen der Art von Fig. 1;
- Fig. 3: unter a) eine Ausführungsform mit mehreren ringförmigen Profilelementen und unter b) eine Ausführungsform, bei welcher die Profilelemente als Zahnräder ausgebildet sind;
- Fig. 4: unter a) - p) schematisch Ausführungsformen erfindungsgemässer Radkonstruktionen mit Profilelementen, welche von stangenförmigen Voll-, Halb- oder Hohlprofilen direkt ablängbar sind;
- Fig. 5: unter a) und b) in perspektivischer Darstellung stangenförmige Hohlprofile sowie unter c) - f) Beispiele für Schnittlinien zum Ablängen der Hohlprofile;
- Fig. 6: unter a) - e) in perspektivischer Darstellung Beispiele für Profilelemente bzw. Teile davon, welche durch Rollen und/oder Biegen aus Flachprofilabschnitten bzw. flachen Stanzteilen hergestellt sind;
- Fig. 7: unter a) - e) schematisch Ausführungsformen erfindungsgemässer Radkonstrktionen, herstellbar unter Verwendung von Profilelementen gemäss Fig. 6;
- Fig. 8: unter a) - e) schematisch weitere Ausführungsformen erfindungsgemässer Radkonstruktionen, hergestellbar unter Verwendung von flachen Profilen oder Stanzteilen;
- Fig. 9: unter a) - c) eine Ausführungsform, welche von der gemäss Fig. 7 b) abgeleitet ist und bei welcher sich bei der Montage bzw. im montierten Zustand eine Vorspannung in der Radkonstruktion ergibt;
- Fig. 10: unter a) - d) eine weitere derartige Ausführungsform, bei welcher eine Vorspannung auch im demontierten Zustand vorhanden ist; und
- Fig. 11: unter a) eine Ansicht und unter b) einen Schnitt I-I einer Ausführungsform, bei welcher die Nabe auswechselbar ist und unter c) - e) Halteelemente für die Verbindung der Profilelemente mit der Nabe.

### WEGE ZUR AUSFÜHRUNG DER ERFINDUNG

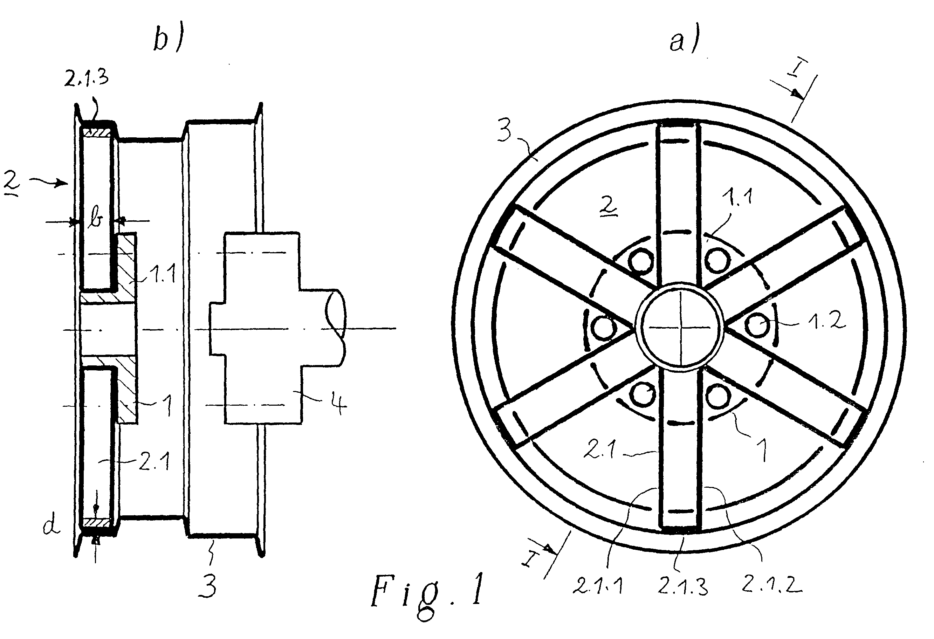

Bei der Radkonstruktion von Fig. 1 bezeichnet 1 die Nabe, 2 das Speichensystem und 3 die Felge. Der Reifen bzw. Pneu wurde zwecks Vereinfachung der Darstellung weggelassen. Das gilt übrigens auch für alle weiteren Figuren. Mit 4 ist, etwas seitlich versetzt, der Teil einer Achskonstruktion eines Fahrzeugs bezeichnet, an welchem die Nabe 1 durch Anschrauben befestigt wird. In einem ringflanschartig ausgebildeten Teil 1.1 ist die Nabe 1 hierzu mit einem Kranz von Montagelöchern versehen, von denen eines mit 1.2 bezeichnet ist.

Das Speichensystem 2 umfasst, wie aus Fig. 1 a) ersichtlich, sechs u-förmige Profilelemente, von denen eines mit 2.1 bezeichnet ist. Die sechs u-förmigen Profilelemente sind mit ihren nach innen gerichteten Schenkeln 2.1.1 und 2.1.2 zwischen Nabe 1 und Felge 3 eingefügt, wobei ihr Verbindungssteg 2.1.3 an der Felgeninnenseite flächig anliegt und die Schenkelenden mit der Nabe 1 sowie ggf. jeweils benachbarte Enden miteinander in Berührung sind. Zu ihrer gegenseitigen Befestigung sind die vorgenannten Teile miteinander, die sich jeweils berührenden Schenkelenden ggf. auch untereinander, verschweisst. Andere Verbindungstechniken wären natürlich auch anwendbar. So könnte insbesondere der Verbindungssteg 2.1.3 mit der Felge 3 auch verschraubt sein. Die Breite b der u-förmigen Profile, d.h. ihre Ausdehnung in axialer Richtung, ist vorzugsweise wesentlich grösser als ihre Dicke d, z.B. um einen Faktor 10:1. Bei Stahl als Material für die Profilelemente 2.1 könnte die Breite b im Bereich zwischen 20 und 50 mm und die Dicke d im Bereich zwischen 3 und 6 mm gewählt werden.

Die gewünschte hohe Steifigkeit insbesondere gegenüber umlaufenden Biegemomenten der eingangs erwähnten Art (Biegung der Nabe 1 aus ihrer parallelen Lage zur Felge 3 heraus) erhält die Struktur von Fig. 1 unter anderem durch die in axialer Richtung ausgedehnte (Breite b) Kontaktfläche des Verbindungssteges 2.1.3 der u-förmigen Profilelemente 2.1 mit der Felge 3 sowie dem ebenfalls in axialer Richtung ausgedehnten, eher linienförmigen Kontakt der Enden ihrer beiden Schenkel 2.1.1 und 2.1.2 mit der Nabe 1, was in der geschnittenen Darstellung von Fig. 1 b) gut zu erkennen ist. Den genannten Biegemomenten, insbesondere jedoch einer Biegung in axialer Richtung setzen die u-förmigen Profilelemente 2.1 wegen des bevorzugt grossen Verhältnisses ihrer Breite b zu ihrer Dicke d auch ein hohes Flächenträgheitsmoment entgegen. Weiter versteifend wirkt auch noch die teilweise seitliche Anlage der Profilelemente an dem ringflanschartig ausgebildeten Teil 1.1 der Nabe 1, wobei bezüglich dieser Anlage, wie in einigen der folgenden Beispiele der Fall, zusätzlich eine feste oder lösbare Verbindung vorgesehen sein könnte.

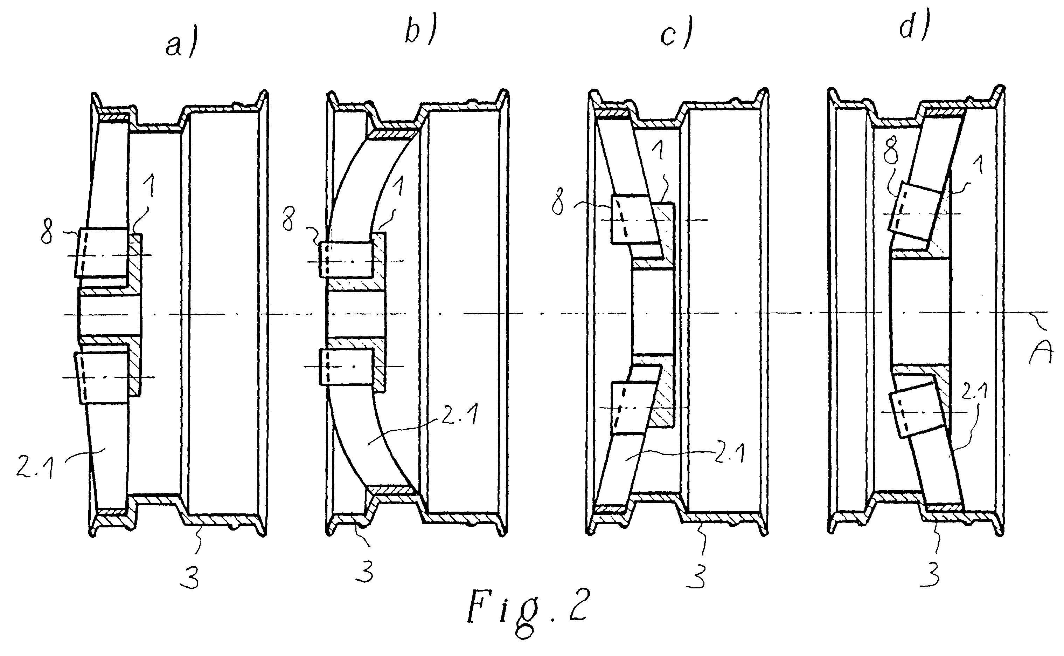

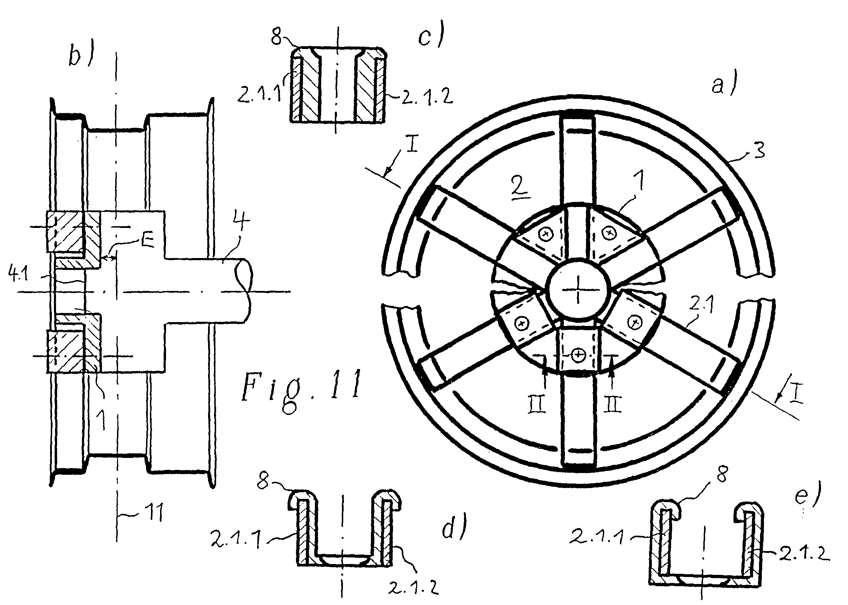

Die Schnitte von Fig. 2 a) - d) zeigen, dass die axialen Stirnflächen der Profilelemente 2.1 nicht notwendigerweise gerade (wie in Fig. 1 b)) sondern auch unter einem schrägen Winkel gegenüber der Radachse A ausgerichtet bzw. gegenüber dieser sogar gekrümmt verlaufen können. Die Schnitte lassen auch verschiedene Möglichkeiten erkennen, wie und wo die Profilelemente 2.1 mit Nabe 1 und Felge 3 verbunden sein können. Die Verbindung der Profilelemente 2.1 mit der Nabe 1 ist hier unter Verwendung von Halteelementen 8 lösbar ausgebildet. Dies erlaubt z.B., die Nabe 1 gegen eine andere auszutauschen. Auf den damit verbundenen Vorteil wird im Zusammenhang mit Fig. 11 noch näher eingegangen. In allen Beispielen von Fig. 2 ist auch wieder Gebrauch gemacht von einem in axialer Richtung erheblich ausgedehnten Kontakt der Profilelemente mit Nabe 1 und Felge 3, um für die gesamte Konstruktion die erwünscht hohe Steifigkeit zu erreichen. Die Beispiele lassen auch erkennen, dass die axiale Position der Nabe 1 relativ zur Felge 3 in weiten Grenzen variierbar ist und so den verschiedensten Anforderungen z.B. an die sogenannte Einpresstiefe oder an den Platzbedarf der Bremsbacken von Scheibenbremsen einfach Rechnung getragen werden kann.

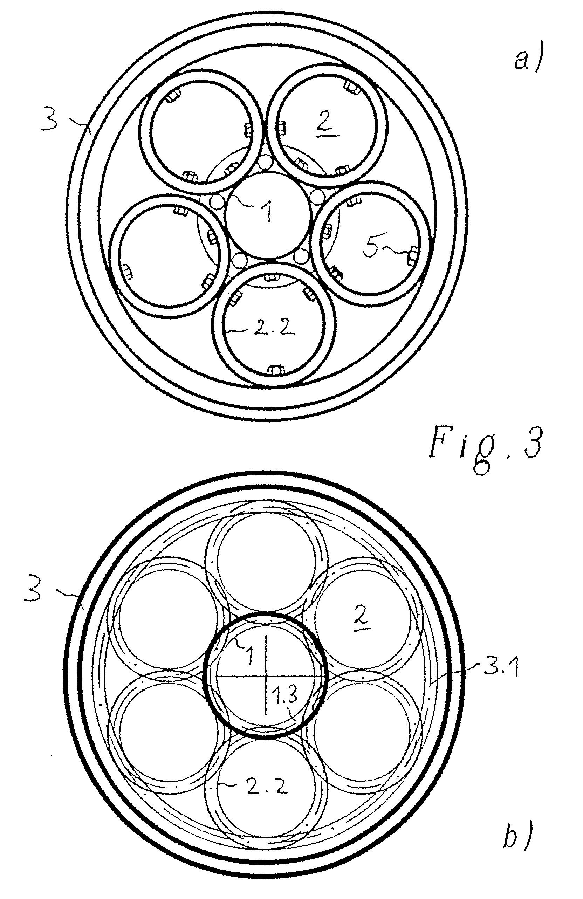

Bei der Radkonstruktion von Fig. 3 a) bezeichnet 1 wieder die Nabe, 2 das Speichensystem und 3 die Felge. Das Speichensystem 2 umfasst hier fünf kreisringförmige Profilelemente, von denen eines mit 2.2 bezeichnet ist und welche zwischen Nabe 1 und Felge 3 bündig sowie mit gegenseitiger Berührung eingefügt sind. Die fünf Profilelemente 2.2 sind jeweils mit der Nabe 1 und der Felge 3 sowie auch untereinander mittels Schrauben verschraubt. Eine der Schrauben ist mit 5 bezeichnet.

Bei der Struktur von Fig. 3 a) werden Belastungen der Radkonstruktion stets auf die gesamte Konstruktion übertragen und von dieser aufgenommen. Wesentliche Deformationen, Verschiebungen oder Drehungen einzelner Profilelemente 2.2 sind nicht möglich, da insbesondere die jeweils benachbarten Profilelemente 2.2 dem jeweils entgegenwirken. Bei zunehmender radialer Belastung ergibt sich z.B. eine gegenseitige Selbsthemmung der Profilelemente 2.2 und damit eine innere Versteifung. Die Verbindungsstellen der Profilelemente 2.2 untereinander sowie mit der Nabe 1 und der Felge 3 sind vor allem Druck- und Scherkräften ausgesetzt. Zur Aufname dieser Kräfte können bereits relativ dünne Schrauben 5 ausreichend sein.

Das Beispiel von Fig. 3 a) zeigt, dass selbst Profilelemente wie Kreisringe, welche für sich betrachtet ein eher ungünstiges Deformations- und Rotationsverhalten aufweisen und deshalb bisher auch als Federelemente in Radkonstruktionen eingesetzt wurden, sich in einem geeigneten Verbund durchaus vorteilhaft im Sinne der Erzielung einer gesamthaft steifen Struktur verhalten können. Natürlich müssen die Wandstärken der Ringe dazu ausreichend dick bemessen werden.

Anstelle der in Fig. 3 a) dargestellten Verschraubung könnten die Profilelemente 2.2 mit der Nabe 1 und der Felge 3 sowie untereinander auch vernietet oder durch Verschweissen oder Verkleben stoffschlüssig verbunden sein. Wegen der Belastung der Verbindungsstellen im wesentlichen nur auf Scherung kann sogar ein einfacher Formschluss wie zwischen ineinandergreifenden Zahnrädern genügen. Fig. 3 b) zeigt eine Ausführungsform, bei welcher die Profilelemente als ineinander sowie in Zahnkränze 1.3 bzw. 3.1 an Nabe 1 und Felge 3 eingreifende Zahnräder ausgebildet sind. Eines der Zahnräder ist wieder mit 2.2 bezeichnet. Bei dieser Ausführungsform wird auch besonders ersichtlich, dass die Struktur bezüglich Rotation seiner Teile gegeneinander selbsthemmend ist.

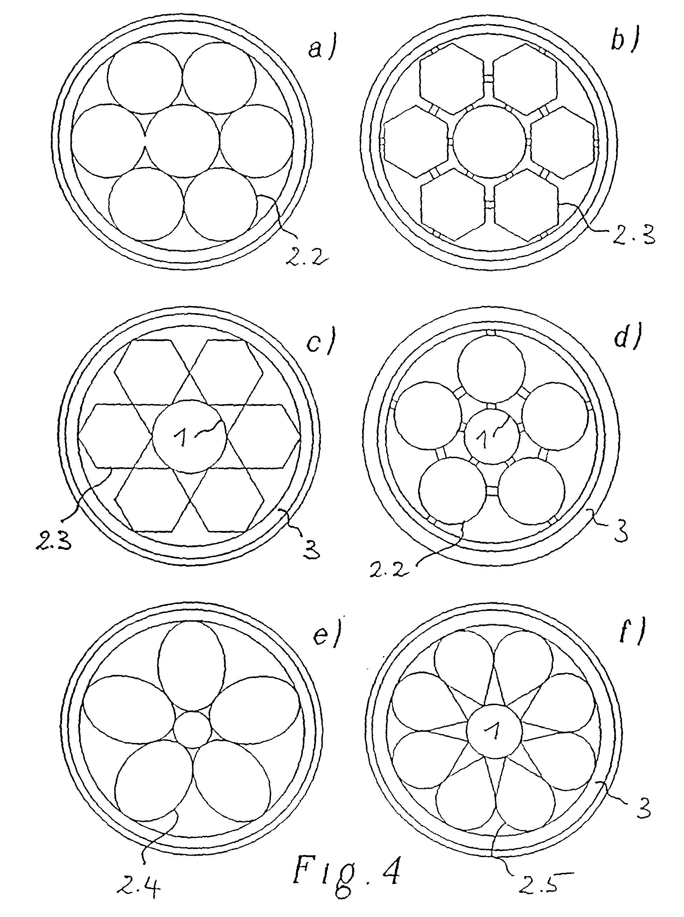

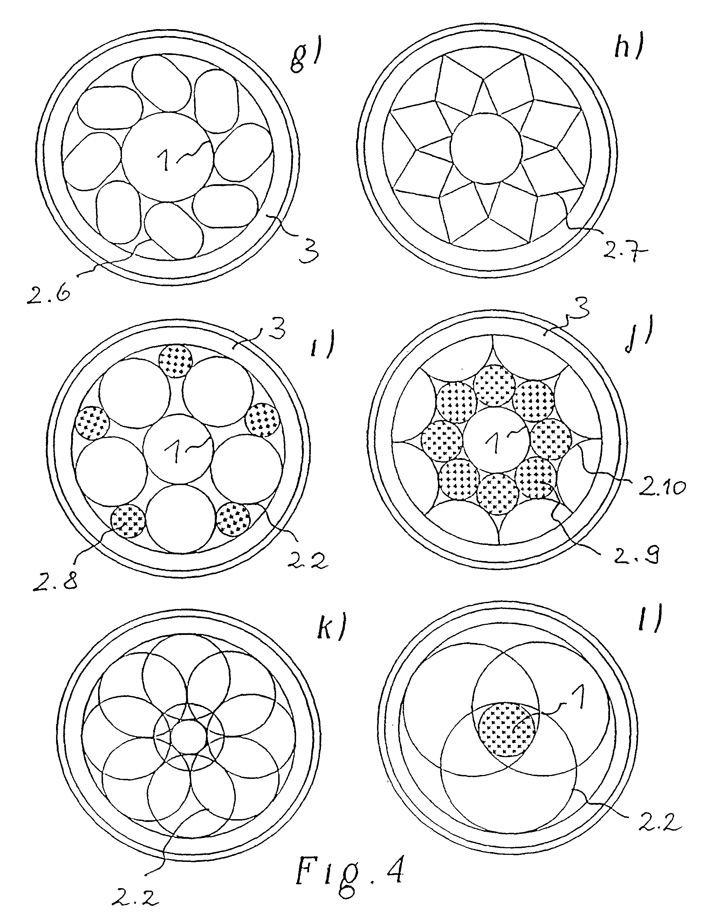

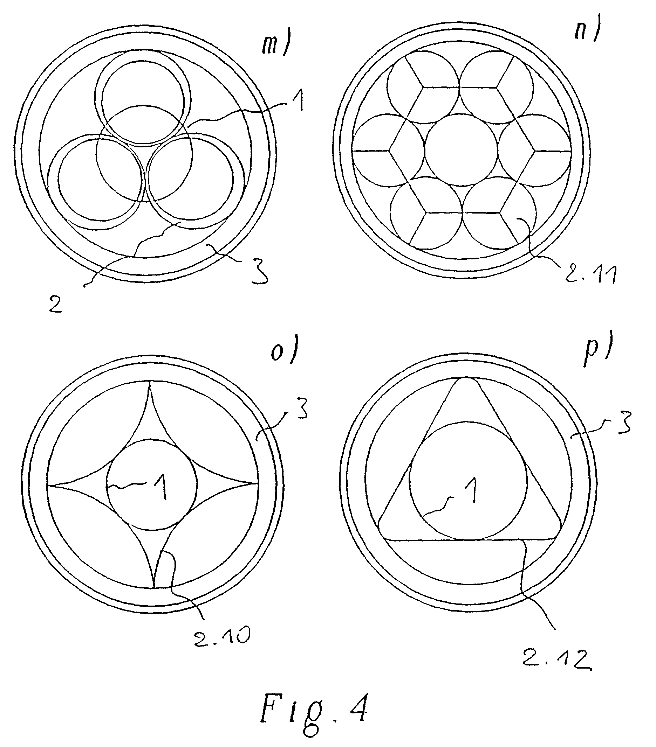

In Fig. 4. sind unter a) - p) weitere mögliche Ausführungsformen erfindungsgemässer Radkonstruktionen schematisch dargestellt, bei welchen von den vorgenannten Konstruktionsprinzipien zwecks Erzielung einer steifen Struktur Gebrauch gemacht ist.

Die Ausführungsform von Fig. 4 a) entspricht der von Fig. 3 a), nur dass hier sechs statt fünf ringförmige Profilelemente 2.2 verwendet sind.

In Fig. 4 b) sind die Profilelemente 2.3 jeweils sechseckig.

In Fig. 4 c) sind ebenfalls sechseckige Profilelemente 2.3 verwendet, welche allerdings hier mit ihren Ecken gegeneinander sowie gegen Nabe 1 und Felge 3 ausgerichtet sind. Zur Verbindung der Profilelemente 2.3 untereinander kommt insbesondere Verschweissen in Frage. An Nabe 1 und Felge 3 könnten die Ecken der Profilelemente 2.3 in Nuten bzw. Kerben formschlüssig festgelegt sein.

Bei der Ausführungsform von Fig. 4 d) sind, wie bei Fig. 3 a), fünf kreisringförmige Profilelemente 2.2 verwendet, welche jedoch im Durchmesser kleiner als die von Fig. 3 a) sind. Zum Ausgleich sind zwischen den Profilelementen 2.1 und zwischen diesen und Nabe 1 und Felge 3 kurze Distanzstücke eingesetzt.

Die fünf Profilelemente 2.4 von Fig. 4 e) weisen eine elliptische Form auf, wobei die Ellipsen-Hauptachse in radialer Richtung angeordnet ist.

Die Profilelemente 2.5 von Fig. 4 f) sind tropfenförmig, wobei die Tropfenspitze zur Nabe 1 hin ausgerichtet ist. Eine umgekehrte Anordnung wäre ebenfalls möglich.

Die Ausführungsform von Fig. 4 e) zeigt acht ovale Profilelemente 2.6, welche jeweils schräg liegend gegenüber der Radialrichtung zwischen Nabe 1 und Felge 3 angeordnet sind.

Im Beispiel von Fig. 4 h) sind die acht Profilelemente 2.7 viereckig, wobei die Stabilität durch Abweichung von der quadratischen Form erhöht ist.

Bei der Ausführungsform von Fig. 4 i) sind Profilelemente 2.2 und 2.8 mit zwei unterschiedlichen Durchmessern kombiniert. Die Profilelemente 2.2 mit dem grösseren Durchmesser sind ringförmig und mit Nabe 1 und Felge 3 verbunden. Die Profilelemente 2.8 mit dem kleineren Durchmesser sind kreisscheibenförmig und nur mit der Felge 3 verbunden.

Das Beispiel von Fig. 4 j) zeigt eine Kombinaton aus nabenseitig in einem dichten Kranz angeordneten kreisscheibenförmigen Profilelementen 2.9 mit felgenseitig angeordneten u-förmigen Halbprofilelementen 2.10. Die kreisscheibenförmigen Profilelemente 2.9 sind hier nur mit der Nabe 1, die u-förmigen Halbprofilelemente 2.10 nur mit der Felge 3 in Verbindung, wobei diese Verbindung formschlüssig durch einen Eingriff in Kerben in der Felge 3 gelöst sein kann. Erwähnenswert an dieser Anordnung ist vor allem die indirekte Verbindung der einzelnen Speichenelemente: Der radiale Druck eines Elements 2.9 nach aussen bewirkt ein "Wegquetschen" der u- bzw. bogenförmigen Halbprofilelemente 2.10 und damit einen radialen Druck der benachbarten Elemente 2.9 nach innen.

Anstelle der Vollscheiben 2.8 in Fig. 4 i) bzw. 2.9 in Fig. 4 j) könnten natürlich auch wieder ringförmige Profilelemente verwendet sein.

Bei der Ausführungsform von Fig. 4 k) sind acht kreisringförmige Profilelemente 2.2 in zwei axial gegeneinander versetzten Ebenen einander gegenseitig überlappend angeordnet.

Fig. 4 l) zeigt eine Auführungsform mit drei axial gegeneinander versetzten, sich gegenseitig überlappenden sowie die Nabe 1 umschlingenden kreisringförmigen Profilelementen 2.2.

Im Beispiel von Fig. 4 m) sind drei kreisringförmige Profilelemente 2.1 bündig sowie in gegenseitiger Berühung zwischen Nabe und Felge eingefügt. Schematisch ist hier weiter angedeutet, dass die Wandstärke der Profilelemente über ihren Umfang ungleichmässig und dort am stärksten gewählt ist, wo die grössten Belastungen zu erwarten sind. Von ungleichmässigen, an die Belastungen angepassten Wandstärken könnte selbstverständlich auch bei allen anderen Ausführungsformen Gebrauch gemacht sein.

Die Ausführungsform gemäss Fig. 4 n) ist unter Verwendung von sechs kreisringförmigen Profilelementen 2.11 aufgebaut, welche jeweils in sich noch zusätzlich durch ein sternförmiges Profil ausgesteift sind. Andere, insbesondere optisch ansprechende Aussteifungsprofile wären natürlich ebenfalls möglich.

Bei der Ausführungsform von Fig. 4 o) ist die Verbindung zwischen Nabe 1 und Felge 3 lediglich durch vier u-förmige Halbprofilelemente 2.10 hergestellt.

Fig. 4 p) zeigt ein Beispiel, bei welchem ein einzelnes, die Nabe 1 umschliessendes, dreieckiges Profilelement verwendet ist.

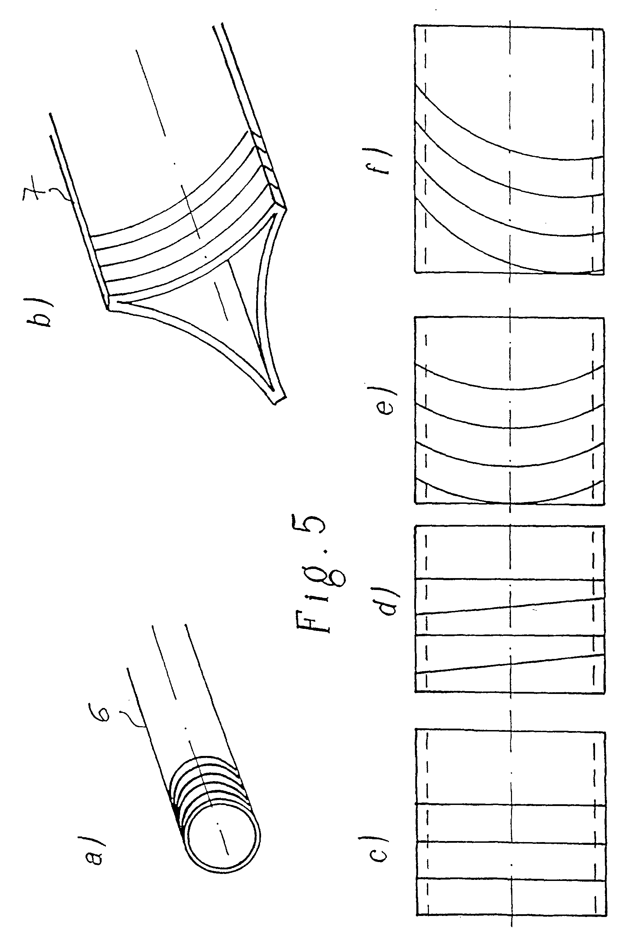

Die für die Ausführungsformen von Fig. 1 - 4 verwendeten Profilelemente können sämtlich unmittelbar von stangenförmigen Voll-, Halb- oder Hohlprofilen abgelängt sein. Fig. 5 zeigt dies unter a) oder b) am Beispiel zweier Hohlprofile 6 und 7, wobei zur Erzeugung gerader, schräger und/oder gekrümmter Stirnflächen (vergl. Fig. 2) der Schnitt auf verschiedenste Weise ausgeführt sein kann. In Fig. 5 sind unter c) - f) vier Beispiele für mögliche Schnittlinien dargestellt.

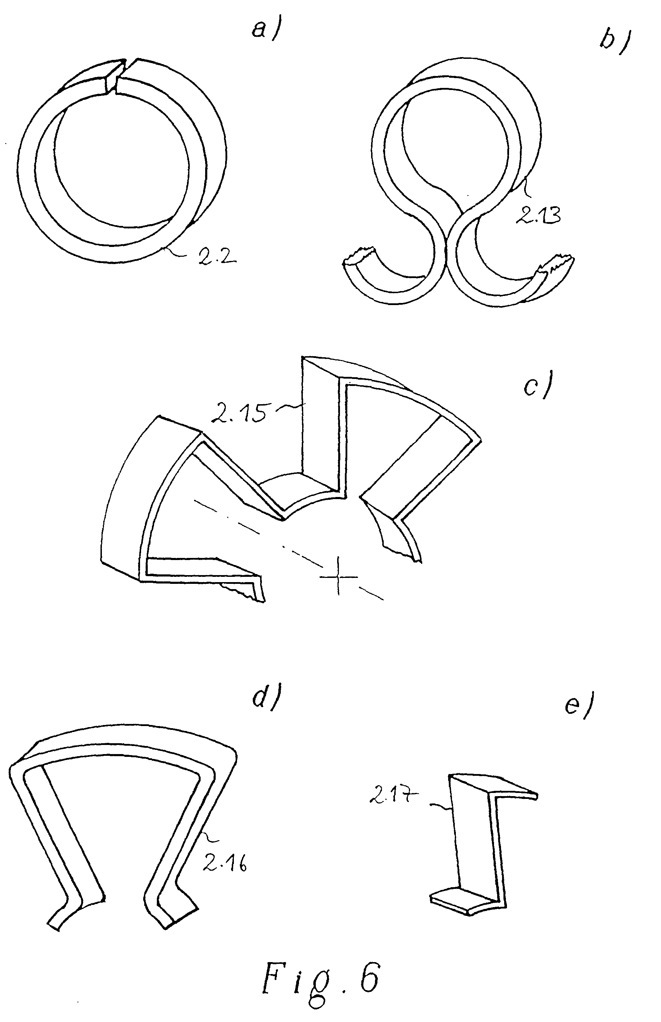

Mit Ausnahme der Vollprofile wie der Scheiben 2.8 und 2.9 in Fig. 4 k) und 4 l) könnten die Profilelemente von Fig. 1 - 4 auch aus Flachprofilabschnitten oder flachen Stanzlingen durch Rollen, Biegen und/oder Schmieden hergestellt sein, wie dies anhand eines ringförmigen Profilelements in Fig. 6 a) dargestellt ist. Der in Fig. 6 a) noch offen dargestellte Ring 2.2 kann z.B. durch Verschweissen seiner Enden geschlossen werden, wobei dies mit Vorteil jedoch erst beim Einfügen zwischen Nabe und Felge erfolgt. Speziell geformte und in Längsrichtung ungleich breite Stanzlinge sind selbstverständlich erforderlich, um durch Rollen und/oder Biegen Profilelemente mit schräg oder gebogen gegenüber der Achsrichtung verlaufenden axialen Stirnseiten herzustellen. Durch Rollen und/oder Biegen lassen sich darüberhinaus aus Flachmaterial aber auch weitere interessante Formen erzeugen, wie dies in den Figuren 6 b) - 6 e) beispielhaft veranschaulicht ist. Die Herstellung der u-förmigen Profilelemente 2.1 von Fig. 1 auf diese Weise bietet sich natürlich ebenfalls an.

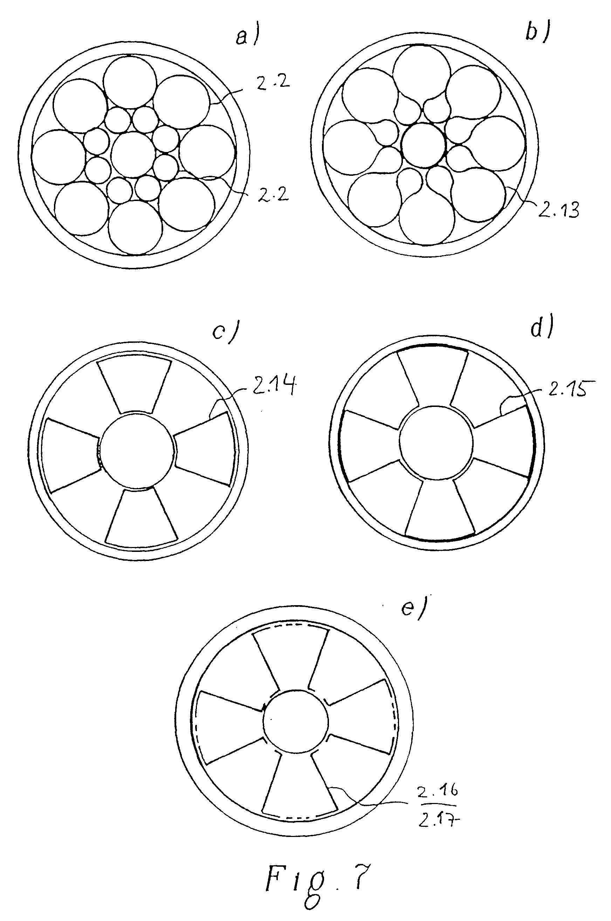

Fig. 7 zeigt neben Fig. 1 unter a) - e) Ausführungsformen erfindungsgemässer Radkonstruktionen, welche speziell (aber nicht ausschliesslich) unter Verwendung von Profilelementen gemäss Fig. 6 herstellbar sind.

So zeigt Fig. 7 a) zunächst eine Ausführungsform mit ringförmigen Profilelementen 2.2, welche entweder jeweils einzeln von einem Hohlprofil mit kreisringförmigem Querschnitt abgelängt oder gemäss Fig. 6 a) aus einem Flachmaterial gerollt sein können. Speziell ist ein äusserer Kranz von acht grösseren Ringen und ein innerer Kranz von acht kleineren Ringen vorgesehen. Eine optisch praktisch gleiche Ausführungsform zeigt in direkter Gegenüberstellung Fig. 7 b), nur dass hier anstelle der einzelnen Ringe ein durchgängiges, quasi endloses, in Schlaufen gebogenes Flachprofil 2.13 gemäss Fig. 6 b) verwendet ist.

Bei der Ausführungsform von Fig. 7 c) sind vier Profilelemente 2.14 vorgesehen, welche wiederum entweder von einem Hohlprofil abgelängt oder aus einem Flachmaterial hergestellt sein können. Eine optisch sehr ähnliche Ausführungsform unter Verwendung eines durchgängigen, quasi endlosen, mehrfach in sich gebogenen Flachmaterials 2.15 gemäss Fig. 6 c) zeigt Fig. 7 d).

Fig. 7 e) zeigt ein Beispiel, bei welchem das endlose Flachmaterial 2.15 von Fig. 7 d) in mehrere, jeweils offene Profilelemente 2.16 gemäss Fig. 6 d) oder sogar in nur noch hakenförmige Profilelemente 2.17 gemäss Fig. 6 e) unterteilt ist.

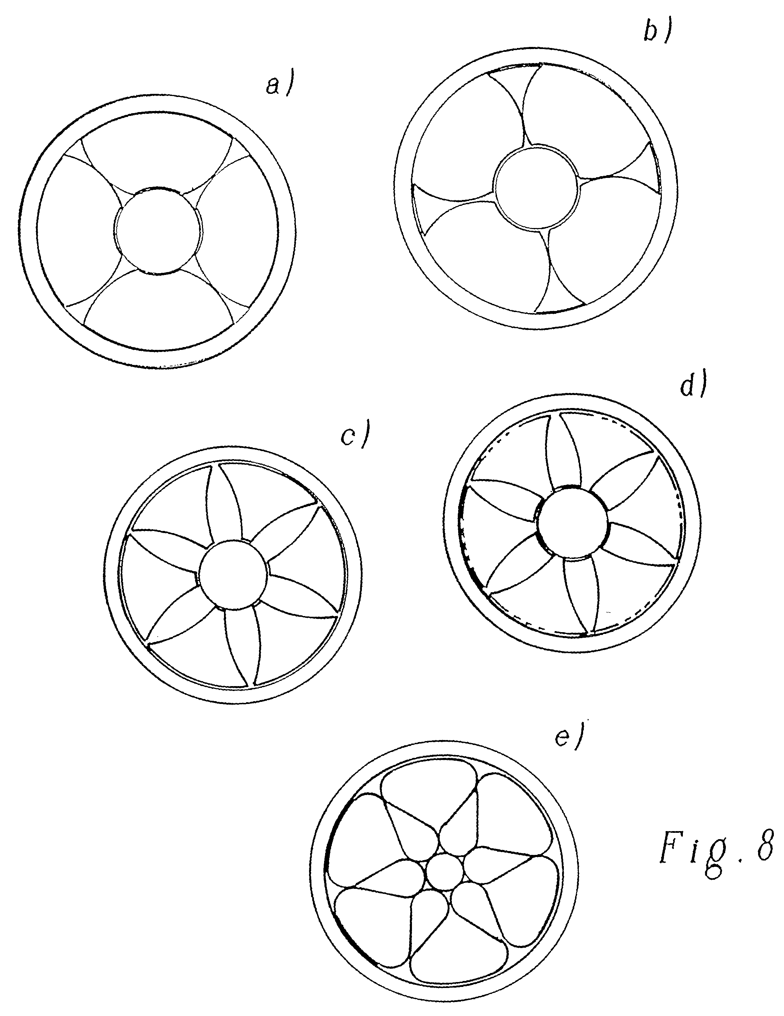

In Fig. 8 sind unter a) - e) noch weitere Beispiele dargestellt, bei welchen die vorstehend erläuterten Konstruktionsformen in der einen oder anderen Weise abgewandelt sind, ohne dass hierbei jedoch der Rahmen der vorliegenden Erfindung verlassen wird.

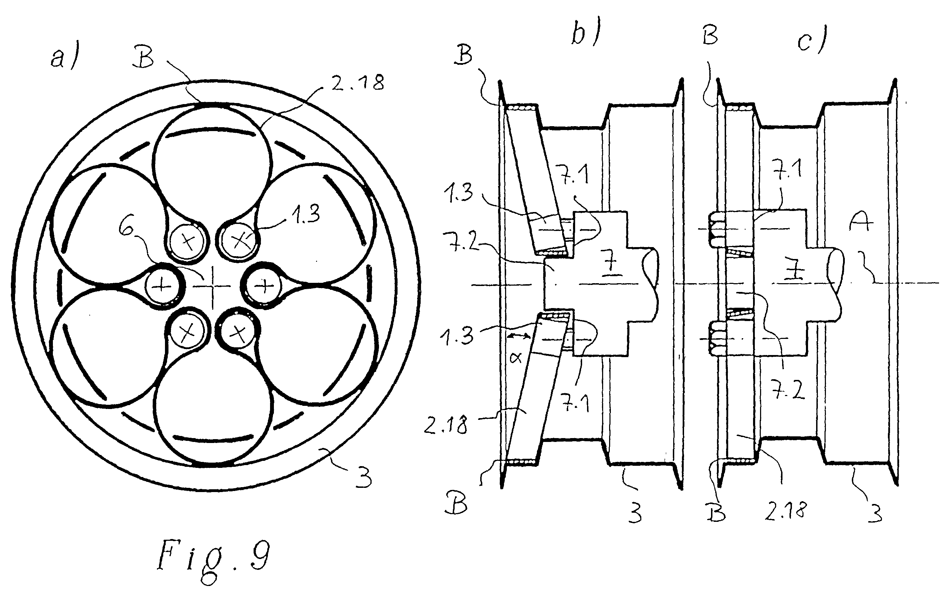

Fig. 9 zeigt unter a) - c) eine Ausführungsform, welche von der gemäss Fig. 7 b) abgeleitet ist. Wie in Fig. 9 a) erkennbar, ist jedoch die in Fig. 7 b) ringförmige Nabe 1 durch Lochscheiben 1.2 ersetzt, welche in die inneren Schlaufen des Flachprofiles 2.18 eingeschweisst sind. Die Schlaufen bzw. die Lochscheiben 1.3 umrahmen kranzförmig eine zentrale Öffnung 6.

In der Schnittdarstellung von Fig. 9 b) ist erkennbar, dass die Stirnseiten des Flachprofils 2.18 unter einem (überzeichnet dargestellten) Winkel α gegenüber der Achsrichtung A verlaufen, wobei die Lochscheiben 1.3 parallel zu den Stirnseiten ausgerichtet sind. Mindestens an den Stellen, von denen eine mit B bezeichnet ist, ist das Flachprofil 2.18 mit der Felge 3 verschweisst. An den gegenseitigen Berühungsstellen benachbarter Schlaufen des Flachprofils 2.18 kann, muss aber keine zusätzliche Verbindung vorgesehen sein.

Wird die so ausgebildete Konstruktion mit einer Achskonstruktion verschraubt, welche, wie die in Fig. 9 b) und c) lediglich schematisch sowie nur teilweise dargestellte Achskonstruktion 7, gegenüber der Achsrichtung A senkrecht ausgerichtete Anlageflächen 7.1 sowie einen zentralen Achszapfen 7.2 aufweist, werden die Flachprofile 2.18 bezüglich der Ausrichtung ihrer Stirnseiten in eine senkrechte Stellung zur Achsrichtung A gedrückt bzw. gezogen, wie dies Fig. 9 c) zeigt. In dieser Stellung ist die gesamte Konstruktion unter Druck vorgespannt.

Unter Druck vorgespannt sind auch die Schweissverbindungen B, was von besonderem Vorteil hinsichtlich der beim Fahren auftretenden Wechselbeanspruchungen ist. Zudem bewirkt das Drücken der Flachprofile 2.18 in die Stellung gemäss Fig. 9 c) eine Verengung der zentralen Öffnung 6 nach Art eines Spannfutters. Bei geeigneter Bemessung dieser Öffnung 7 relativ zum Durchmesser des zentralen Zapfens 7.2 der Achskonstruktion 7 kann diese Verengung zur Mittelzentrierung bezüglich der Achse A ausgenutzt werden.

Bei der Ausführungsform von Fig. 9 bildet sich die endgültige Steifigkeit der gesamten Radkonstruktion erst im fahrbereit montierten Zustand aus, wobei die Achskonstruktion 7 funktionell zur Gesamtkonstruktion und Steifigkeit mit beiträgt. Die Achskonstruktion 7 könnte hier als Nabe oder zumindest als ihr achsseitiger Teil mit den Lochscheiben 1.3 als ihr radseitiger Teil aufgefasst werden.

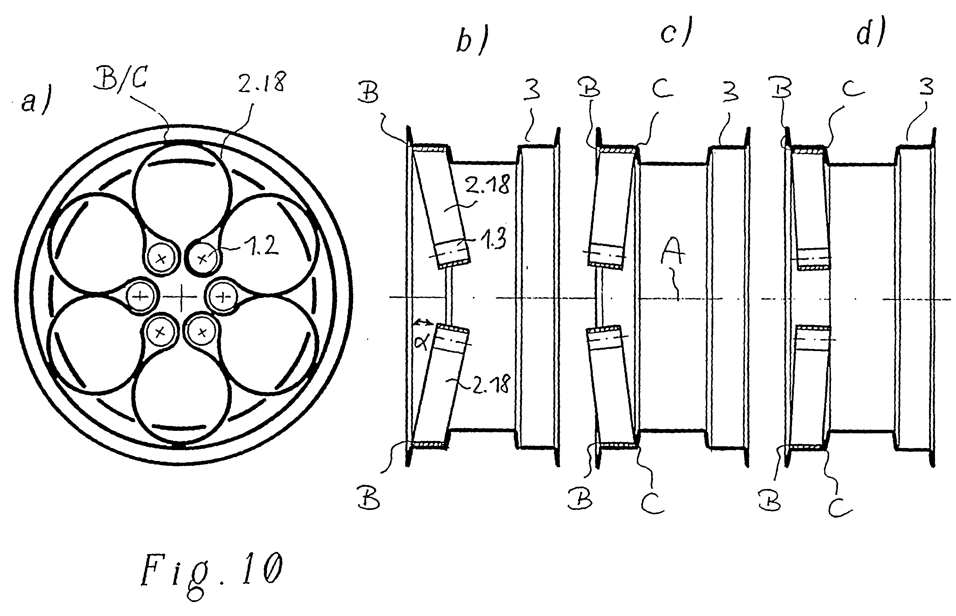

Bei der Ausführungsform von Fig. 10 sind neben den unter Druck vorgespannten, aussenseitig angeordneten Schweissverbindungen B noch innenseitig angeordnete Schweissverbindungen vorgesehen, von denen eine mit C bezeichnet ist. Auch diese Schweissverbindungen C sind unter Druck vorgespannt. In einem ersten Schritt wird nur die Schweissverbindung B im spannungslosen Zustand der Flachprofile 2.18 gemäss Fig. 10 b) angebracht, wobei die Stirnseiten der Flachprofile wieder unter einem Winkel α gegenüber der Achsrichtung A schräg nach innen ausgerichtet sind. Hiernach werden die Flachprofile 2.18 über ihre spätere gewünschte Montageposition hinaus nach aussen gedrückt, wobei die Schweissverbindungen B unter Druck vorgespannt werden. In dieser, in Fig. 10 c) gezeigten überdrückten Stellung werden in einem zweiten Schritt die Schweissverbindungen C angebracht. Beim Zurückfedern der Flachprofile 2.18 nach axialer Entspannung werden auch die Schweissverbindungen C unter Druck vorgespannt. Abhängig von der Vorspannung beider Schweissverbindungen B und C stellen sich die Flachprofile 2.18 in einer Gleichgewichtsposition ein, wie dies Fig. 10 d) beispielhaft zeigt. Die Gleichsgewichtsposition kann, muss aber nicht, der endgültigen, gewünschten Montageposition entsprechen. Sind die Stirnflächen der Flachprofile in der Gleichsgewichtsposition schräg gegeüber der Achsrichtung A ausgerichtet, kann auch hier wieder der vorbeschriebene Spannfutter- und Zentrierungseffekt ausgenutzt werden.

Die Ausführungsform von Fig. 11 entspricht weitgehend der von Fig. 1, nur dass hier die Nabe 1 als ein auswechselbares Teil ausgebildet ist und die u-förmigen Profile 2.1 mit dieser nicht fest sondern lösbar verbunden sind. Der Grund für diese Ausbildung liegt zum einen in der Zentrierung von Automobilrädern auf der Mittenzentrierung 4.1 der Achskonstruktion 4, deren Mass von Hersteller zu Hersteller variiert. Ein sonst gleiches Rad kann deshalb nicht einfach für verschiedene Autotypen verwendet werden. Dies zwingt die Hersteller von Rädern zu einer erheblichen Typenvielfalt und die Händler und Werkstätten zu einer umfangreichen Lagerhaltung. Bei der Ausführungsform von Fig. 11 braucht zur Anpassung an einen bestimmten Autotyp bzw. an eine bestimmte Herstellernorm mit Vorteil lediglich die Nabe 1 entsprechend ausgewählt oder ausgewechselt werden.

Ein anderer Vorteil der Auswechselbarkeit der Nabe 1 liegt in der Möglickeit, die sogenannte Einpresstiefe E des Rades zu verändern. Die Einpresstiefe E ist mitbestimmend für die Spurbreite des Fahrzeugs. Es versteht sich, dass sich die Einpresstiefe E durch Variation der axialen Dicke der auswechselbaren Nabe 1 verändern lässt.

Zur lösbaren Verbindung der Enden der Schenkel 2.1.1 und 2.1.2 der u-förmigen Profilelemente 2.1 mit der auswechselbaren Nabe 1 sowie generell zur Lagefixierung dieser Schenkel sind, wie schon bei den Ausführungsformen von Fig. 2, Halteelemente 8 vorgesehen, welche zwischen die Schenkelenenden eingepasst sind oder diese von aussen umgreifen, wie dies in Fig. 11 unter c)-e) im Schnitt dargestellt ist. Die Haltelemente 8 können dabei jeweils den Schenkeln derselben u-Profilelemente (Fig. 11 a) unten) oder auch den Schenkeln benachbarter Profilelemente (Fig. 11 a) oben) zugeordnet sein.

Es soll an dieser Stelle nochmals hervorgehoben werden, dass bei den vorbeschriebenen Ausführungsformen die gewünschte hohe Steifigkeit insbesondere gegenüber umlaufenden Biegemomenten unter anderem durch in axialer Richtung verhältnismässig ausgedehnte Kontaktflächen- oder -linien der Profilelemente mit der Nabe 1 einerseits und der Felge 2 andererseits erreicht wird. Die Profilelemente sind dadurch zwischen Nabe 1 und Felge 3 quasi "eingespannt" und liegen in Radialrichtung sogar teilweise zusätzlich noch an Ausformungen dieser Elemente an, wie z.B. an dem ringflanschförmigen Teil 1.1 der Nabe 1 von Fig. 1. Auf diese Weise wird die Eigensteifigkeit von Nabe 1 und Felge 3 in die Steifigkeit der gesamten Struktur optimal einbezogen.

Generell sind die vorstehenden Beispiele als nicht abschliessend zu verstehen. Vielmehr sollen sie lediglich verdeutlichen, dass im Rahmen der erfindungsgemässen Idee auf einfache Weise eine Vielzahl von Ausbildungen und Formen realisierbar sind. Die vorbeschriebenen Ausführungsprinzipien sind natürlich auch untereinander noch weiter kombinierbar. Auch sollte ihre Über- oder Unterordnung relativ zueinander im Rahmen der vorstehenden Beschreibung nicht als zwingend angesehen werden, so dass gewissen, lediglich als untergeordnet dargestellten Ausführungsformen durchaus eine eigene erfinderische Qualität zukommen könnte. Dies betrifft z.B. die Ausführungsformen von Fig. 9 und 10 bezüglich der Vorspannung von Schweissverbindungen oder der erwähnten Mittelzentrierung durch Verengung oder der Ausführungsform mit einer auswechselbaren Nabe gemäss Fig. 11. Die Ausführungsbeispiele von Fig. 9 - 11 sind auch nicht auf die Verwendung von gerollten oder gebogenen Flachprofilen beschränkt.

## Patentansprüche

1. Radkonstruktion mit Felge (3) und Speichensystem (2), wobei das Speichensystem (2) mindestens ein Profilelement (2.1 - 2.18) zur Übertragung der Kräfte zwischen Nabe (1) und Felge (3) aufweist,
**dadurch gekennzeichnet,**
**dass** die genannten Teile zu einer in sich steifen Struktur zusammengefügt oder zusammenfügbar sind, welche Struktur sich unter den auf sie bestimmungsgemäss einwirkenden Kräften und Drehmomenten praktisch nicht, allenfalls aber in der Grössenordnung von einigen Millimetern deformiert, und
**dass** das mindestens eine Profilelement
a) wenigstens teilweise aus Stahl, einem Leichtmetall oder einer Leichtmetall-Legierung mit jeweils einer gleichmässig in Profillängsrichtung ausgerichteten Kristallstruktur besteht, und
b) eine Breite (b) in axialer Richtung (A) auf weist, die wesentlich grösser ist als seine nicht notwendig einheitliche Wandstärke (d) in Radial- und/oder Umfangsrichtung.

2. Radkonstruktion nach Anspruch 1, **dadurch gekennzeichnet, dass** das mindestens eine Profilelement eine ausgedehnte Kontaktfläche mit der Felge hat, deren Ausdehnung wesentlich grösser ist als seine nicht notwendig einheitliche Wandstärke in Radial- und/oder Umfangsrichtung.

3. Radkonstruktion nach einem der Ansprüche 1 oder 2, **dadurch gekennzeichnet, dass** die nicht notwendig einheitliche Breite des mindestens einen Profilelements zwischen 20 und 50 mm und/oder die nicht notwendig einheitliche Wandstärke des mindestens einen Profilelements zwischen 3 und 6 mm und oder das Verhältnis zwischen Breite und Wandstärke ca. 1:10 beträgt.

4. Radkonstruktion nach einem der Ansprüche 1 - 3, **dadurch gekennzeichnet, dass** die Kräfte zwischen Nabe und Felge von speichenartigen Abschnitten mindestens eines Profilelements übertragen werden.

5. Radkonstruktion nach Anspruch 4, **dadurch gekennzeichnet, dass** die Anzahl der speichenartigen Abschnitte maximal 12, insbesondere sogar nur maximal 8 beträgt.

6. Radkonstruktion nach einem der Anprüche 4 oder 5, **dadurch gekennzeichnet, dass** die speichenartigen Abschnitte (2.1.1, 2.1.2) jeweils paarweise parallel sowie mit Abstand zu einem Radius ausgerichtet sind.

7. Radkonstruktion nach einem der Ansprüche 4 - 6, **dadurch gekennzeichnet, dass** die speichenartigen Abschnitte die Schenkel (2.1.1, 2.1.2) von u-förmigen Profilelementen (2.1) sind.

8. Radkonstruktion nach Anspruch 7, **dadurch gekennzeichnet, dass** die u-förmigen Profilelemente einen Verbindungssteg (2.1.3) aufweisen und mit diesem an der Felge (3) anliegen und/oder befestigt sind

9. Radkonstruktion nach einem der Ansprüche 4 - 8, **dadurch gekennzeichnet, dass** die speichenartigen Abschnitte jeweils ein inneres, nabenseites Ende aufweisen und jedes solches Ende jedes einzelnen Abschnitts mit einem entsprechenden Ende eines benachbarten Abschnitts in Berührung ist.

10. Radkonstruktion nach einem der Ansprüche 1 - 9, **dadurch gekennzeichnet, dass** das mindestens eine Profilelement von einem Voll-, Halb- oder Hohlprofil (6,7) mit einem ihm entsprechenden Querschnitt abgelängt ist.

11. Radkonstruktion nach einem der Ansprüche 1 - 9, **dadurch gekennzeichnet, dass** das mindestens eine Profilelement durch Rollen und/oder Biegen und/oder Schmieden aus einem Flachprofilabschnitt oder einem flachen Stanzteil hergestellt ist.

12. Radkonstruktion nach einem der Ansprüche 1 - 11, **dadurch gekennzeichnet, dass** das mindestens eine Profilelement (2.1-2.18) mit der Nabe (1) und/oder der Felge (3) sowie ggf. benachbarte Profilelemente vorzugsweise auch untereinander verbunden oder in Eingriff sind.

13. Radkonstruktion nach Anspruch 12, **dadurch gekennzeichnet, dass** das mindestens eine Profilelement (2.1-2.18) mit der Nabe (1) und/oder mit der Felge (3) sowie ggf. benachbarte Profilelemente untereinander verschraubt, vernietet und/oder stoffschlüssig und/oder formschlüssig verbunden sind.

14. Radkonstruktion nach Anspruch einem der Ansprüche 1-13, **dadurch gekennzeichnet, dass** die Profilelemente wenigstens teilweise u-bzw. v-förmig (2.1, 2.10), ringförmig (2.1,2.4,2.6), scheibenförmig (2.8,2.9), tropfenförmig (2.5), vieleckig (2.3, 2.7) oder schlaufenförmig gebogen sind.

15. Radkonstruktion nach einem der Ansprüche 1 - 14, **dadurch gekennzeichnet, dass** die axialen Stirnflächen zumindest einzelner Profilelemente (2.1-2.18) unter einem schrägen Winkel gegenüber der Radachse (A) ausgerichtet sind oder gegenüber dieser gekrümmt verlaufen.

16. Radkonstruktion nach einem der Ansprüche 1 - 15, **dadurch gekennzeichnet, dass** die Profilelemente (2.2) in mehreren Ebenen hintereinander angeordnet sind.

17. Radkonstruktion nach einem der Ansprüche 1 bis 16, **dadurch gekennzeichnet, dass** die Wandstärke des mindestens einen Profilelements nicht überall gleichmässig gewählt und an die zu erwartenden Belastungen angepasst ist.

18. Radkonstruktion nach einem der Ansprüche 4 - 17, **dadurch gekennzeichnet, dass** mindestens eine der Verbindungen zwischen verschiedenen Teilen, insbesondere die Verbindungen (B,C) zwischen Speichensystem (2.18) und Felge (3), zumindest im fahrbereit montierten Zustand, unter Druck vorgespannt ist/sind.

19. Radkonstruktion nach Anspruch 18, **dadurch gekennzeichnet, dass** sie einen Teil (7,7.1,7.2) der Achskonstruktion als achsseitiges Nabenteil umfasst und dass die Vorspannung sowie die in sich steife Struktur durch Verspannen des Speichensystems (2.18) und/oder eines radseitigen Nabenteils mit dem achsseitigen Nabenteil erzeugt wird.

20. Radkonstruktion nach Anspruch 19, **dadurch gekennzeichnet, dass** sich bei dem Verspannen des Speichsystems (2.18) mit dem genannten Teil der Achskonstruktion eine zentrale Öffnung im Speichensystem nach Art eines Spannfutters radial verkleinert und dadurch Speichensystem und Felge auf einem Achszapfen der Achskonstruktion mittenzentriert werden.

21. Radkonstruktion nach einem der Ansprüche 1 bis 20, **dadurch gekennzeichnet, dass** die Nabe (1) als ein auswechselbares Teil und mit dem Speichensystem (2) lösbar verbunden ist.

22. Radkonstruktion nach Anspruch 1, **dadurch gekennzeichnet, dass** das mindestens eine Profilelement lösbar mit der Nabe verbunden ist, dass die Nabe wenigstens teilweise Teil der Achskonstruktion des Fahrzeugs ist, und dass sich die endgültige Steifigkeit der Radkonstruktion erst im fahrbereit montierten Zustand ausbildet.

23. Radkonstruktion nach Anspruch 1, **dadurch gekennzeichnet, dass** zur Verbindung des mindestens einen Profilelements mit der Nabe Lochscheiben (1.3) oder Haltelemente (8) vorgesehen sind.

24. Speichensystem der Radkonstruktion nach einem der Ansprüche 1- 23.

## Claims

1. Wheel structure with rim (3) and spoke system (2), the spoke system (2) having at least one profile element (2.1-2.18) for transmitting forces between hub (1) and rim (3), **characterized in that** said parts are combined or can be combined into an intrinsically stiff structure, which, under the intended forces and torques acting thereon does not deform or only deforms by a few millimetres and
that the at least one profile element
a) is at least partly made from steel, a light metal or a light metal alloy with in each case a crystal structure uniformly oriented in the profile longitudinal direction and
"b) has a width (b) in axial direction (A) which is significantly greater than its not necessarily uniform wall thickness (d) in the radial and/or circumferential direction."

2. Wheel structure according to claim 1, **characterized in that** the at least one profile element has a large contact surface with the rim, whose extension is much greater than its not necessarily uniform wall thickness in the radial and/or circumferential direction.

3. Wheel structure according to one of the claims 1 or 2, **characterized in that** the not necessarily uniform width of the at least one profile element is between 20 and 50 mm and/or the not necessarily uniform wall thickness of the at least one profile element is between 3 and 6 mm or the ratio between the width and wall thickness is approximately 1:10.

4. Wheel structure according to one of the claims 1 to 3, **characterized in that** the forces between the hub and the rim are transmitted by spoke-like sections of at least one profile element.

5. Wheel structure according to claim 4, **characterized in that** the number of spoke-like sections is max.12, particularly only max.8.

6. Wheel structure according to one of the claims 4 or 5, **characterized in that** the spoke-like sections (2.1.1, 2.1.2) are oriented in each case pair-wise and parallel and spaced with respect to a radius.

7. Wheel structure according to one of the claims 4 to 6, **characterized in that** the spoke-like sections are the legs (2.1.1, 2.1.2) of U-shaped profile elements (2.1).

8. Wheel structure according to claim 7, **characterized in that** the U-shaped profile elements have a connecting web (2.1.3) and engage therewith and/or are fixed to the rim (3).

9. Wheel structure according to one of the claims 4 to 8, **characterized in that** the spoke-like sections in each case have an inner, hub-side end and each such end of each individual section is in contact with a corresponding end of a neighbouring section.

10. Wheel structure according to one of the claims 1 to 9, **characterized in that** the at least one profile element is cut to length from a solid, half or hollow profile (6, 7) with a cross-section corresponding thereto.

11. Wheel structure according to one of the claims 1 to 9, **characterized in that** the at least one profile element is manufactured by rolling and/or bending and/or forging from a flat profile section or a flat stamping.

12. Wheel structure according to one of the claims 1 to 11, **characterized in that** the at least one profile element (2.1-2.18) with the hub (1) and/or rim (3), as well as optionally adjacent profile elements are preferably interconnected or in engagement.

13. Wheel structure according to claim 12, **characterized in that** the at least one profile element (2.1-2.18) with the hub (1) and/or rim (3), as well as optionally adjacent profile elements are screwed, riveted and/or integrally and/or positively interconnected.

14. Wheel structure according to one of the claims 1 to 13, **characterized in that** the profile elements are at least partly u or v-shaped (2.1, 2.10), circular (2.1, 2.4, 2.6), disk-shaped (2.8, 2.9), drop-shaped (2.5), polygonal (2.3, 2.7) or loop-like bent.

15. Wheel structure according to one of the claims 1 to 14, **characterized in that** the axial faces of at least individual profile elements (2.1-2.18) are oriented under an inclined angle to the wheel axis (A) or are curved with respect thereto.

16. Wheel structure according to one of the claims 1 to 15, **characterized in that** the profile elements (2.2) are successively arranged in several planes.

17. Wheel structure according to one of the claims 1 to 16, **characterized in that** the wall thickness of the at least one profile element is not overall uniform and is adapted to the expected stresses and loads.

18. Wheel structure according to one of the claims 4 to 17, **characterized in that** at least one of the connections between different parts, particularly the connections (B, C) between the spoke system (2.18) and rim (3), is or are compressively preloaded in the ready-to-travel, fitted state.

19. Wheel structure according to claim 18, **characterized in that** it comprises a part (7, 7.1, 7.2) of the axle structure as an axle-side hub part and that the preloading and the intrinsically stiff structure is obtained by bracing the spoke system (2.18) and/or a wheel-side hub part with the axle-side hub part.

20. Wheel structure according to claim 19, **characterized in that** on bracing the spoke system (2.18) with said part of the axle structure, a central opening in the spoke system is radially constricted in the manner of a chuck and consequently the spoke system and rim are mid-centred on a journal of the axle structure.

21. Wheel structure according to one of the claims 1 to 20, **characterized in that** the hub (1) has a replaceable part detachably connected to the spoke system (2).

22. Wheel structure according to claim 1, **characterized in that** the at least one profile element is detachably connected to the hub, that the hub is at least partly part of the axle structure of the vehicle an that the ultimate stiffness to the overall wheel structure is only obtained in the ready-to-travel, fitted state.

23. Wheel structure according to claim 1, **characterized in that** for the connection of the at least one profile element to the hub perforated discs (1.3) or holding elements (8) are provided.

24. Spoke system of the wheel structure according to one of the claims 1 to 23.

## Revendications

1. Construction de roue avec jante (3) et système de rayon (2), le système de rayon (2) présentant au moins un élément profilé (2.1 - 2.18) pour la transmission des forces entre le moyeu (1) et la jante (3),
**caractérisé en ce que**
les pièces citées sont assemblées ou assemblables en une structure rigide en soi, cette structure ne se déformant pratiquement pas et en aucun cas dans un ordre de grandeur de quelques millimètres, sous les forces et couples de rotation adaptées qui agissent sur elle et
qu'au moins un élément profilé
a) est fabriqué au moins partiellement en acier, métal léger ou alliage de métal léger avec respectivement une structure de cristaux orientés régulièrement dans le sens longitudinal du profil et
b) présente une largeur (b) dans le sens axial (A) qui est sensiblement plus importante que son épaisseur (d) non obligatoirement uniforme dans lesens radial et/ou le sens du volume.

2. Construction de roue selon la revendication 1, **caractérisée en ce qu'**au moins un élément profilé a une surface de contact étendue avec la jante, dont l'extension est notablement plus importante que son épaisseur non obligatoirement uniforme dans le sens radial et/ou le sens du volume.

3. Construction de roue selon une des revendications 1 ou 2, **caractérisée en ce que** la largeur non obligatoirement uniforme d'au moins un élément profilé se situe entre 20 et 50 mm et/ou la largeur non obligatoirement uniforme d'au moins un élément profilé se situe entre 3 et 6 mm et/ou le rapport entre la largeur et l'épaisseur est d'environ 1 :10.

4. Construction de roue selon une des revendications 1 à 3, **caractérisée en ce que** les forces sont transmises entre le moyeu et la jante par les sections en forme de rayons d'au moins un élément profilé.

5. Construction de roue selon la revendication 4, **caractérisée en ce que** le nombre de sections en forme de rayons est au maximum de 12, en particulier même d'un maximum de 8 seulement.

6. Construction de roue selon une des revendications 4 ou 5, **caractérisée en ce que** les sections en forme de rayons (2.1.1, 2.1.2) sont orientées respectivement parallèlement par paires avec un écart par rapport à un rayon.

7. Construction de roue selon une des revendications 4 à 6, **caractérisée en ce que** les sections en forme de rayons sont les branches (2.1.1, 2.1.2) d'éléments profilés en U (2.1).

8. Construction de roue selon la revendication 7, **caractérisée en ce que** les éléments profilés en U présentent une traverse de liaison (2.1.3) et sont positionnés et/ou fixés sur la jante (3) à l'aide de celle-ci.

9. Construction de roue selon une des revendications 4 à 8, **caractérisée en ce que** les sections en forme de rayons présentent respectivement une extrémité interne près du moyeu et que chacune de ces extrémités est en contact avec chacune des extrémités correspondantes d'une section voisine.

10. Construction de roue selon une des revendications 1 à 9, **caractérisée en ce qu'**au moins un élément profilé est prolongé par un profil complet, un demi profil ou un profil creux (6, 7) avec une section transversale lui correspondant.

11. Construction de roue selon une des revendications 1 à 9, **caractérisée en ce qu'**au moins un élément profilé est fabriqué par roulage et/ou pliage ou forge à partir d'une section profilée plate ou d'une pièce estampée plate.

12. Construction de roue selon une des revendications 1 à 11, **caractérisée en ce qu'**au moins un élément profilé (2.1 - 2.18) ainsi que, le cas échéant, les éléments profilés voisins sont également reliés de préférence entre eux ou en prise avec le moyeu (1) et/ou la jante (3).

13. Construction de roue selon la revendication 12, **caractérisée en ce que** qu'au moins un élément profilé (2.1 - 2.18) ainsi qu'éventuellement les éléments profilés voisins sont vissés, rivetés ensemble et/ou en liaison de matière et/ou liaison mécanique avec le moyeu (1) et/ou avec la jante (3).

14. Construction de roue selon une des revendications 1 à 13, **caractérisée en ce que** les éléments profilés sont au moins partiellement et le cas échéant cintrés en forme de V (2.1, 2.10), de bague (2.1, 2.4, 2.6), de disque (2.8, 2.9), de goutte (2.5), de polygone (2.3, 2.7) ou de noeud coulant.

15. Construction de roue selon une des revendications 1 à 14, **caractérisée en ce que** les surfaces frontales axiales d'au moins certains éléments profilés (2.1 - 2.18) sont orientées sous un angle diagonal par rapport à l'essieu de la roue (A) ou sont arquées par rapport à celui-ci.

16. Construction de roue selon une des revendications 1 à 15, **caractérisée en ce que** les éléments profilés (2.2) sont placés les uns derrière les autres dans plusieurs plans.

17. Construction de roue selon une des revendications 1 à 16, **caractérisée en ce que** l'épaisseur d'au moins un élément profilé n'est pas fixée partout de façon uniforme et est adaptée aux sollicitations prévisionnelles.

18. Construction de roue selon une des revendications 4 à 17, **caractérisée en ce que** qu'au moins une des liaisons entre les différentes pièces, en partie les liaisons (B,C) entre le système de rayons (2.18) et la jante (3), est/sont, du moins à l'état monté, prêt à l'usage en conduite, précontraintes sous pression.

19. Construction de roue selon la revendication 18, **caractérisée en ce qu'**elle englobe une pièce (7, 7.1, 7.2) de la construction de l'essieu comme pièce de moyeu voisine de l'essieu et que la précontrainte ainsi que la structure rigide en soi sont obtenues par serrage du système de rayons (2.18) et/ou d'une pièce de moyeu voisine de la roue avec la pièce de moyeu voisine de l'essieu.

20. Construction de roue selon la revendication 19, **caractérisée en ce que**, lors du serrage du système de rayons (2.18) avec ladite pièce de la construction de l'essieu, une ouverture centrale du système de rayons se rétrécit de façon radiale à la manière d'un mandrin de serrage et qu'ainsi le système de rayons et la jante sont centrées sur un pivot de la construction de l'essieu.

21. Construction selon une des revendications 1 à 20, **caractérisée en ce que** le moyeu (1) est en liaison mobile en tant que pièce amovible et avec le système de rayons (2).

22. Construction de roue selon la revendication 1, **caractérisée en ce qu'**au moins un élément profilé est en liaison mobile avec le moyeu, que le moyeu est au moins partiellement une pièce de la construction de l'essieu du véhicule et que la rigidité finale de la construction de roue n'est obtenue qu'à l'état monté prêt à l'usage en conduite.

23. Construction de roue selon la revendication 1, **caractérisée en ce que**, pour la liaison d'au moins un élément profilé avec le moyeu, des disques perforés (1.3) ou éléments supports (8) sont prévus.

24. Système de rayons de construction de roue selon une des revendications 1 à 23.
